(19) Europäisches Patentamt
European Patent Office
Office européen des brevets

(11) **EP 4 610 875 A1**

(12) **EUROPEAN PATENT APPLICATION**
published in accordance with Art. 153(4) EPC

(43) Date of publication:
**03.09.2025 Bulletin 2025/36**

(21) Application number: **23881528.6**

(22) Date of filing: **19.09.2023**

(51) International Patent Classification (IPC):
**G06F 30/373** (2020.01)

(52) Cooperative Patent Classification (CPC):
**G06F 30/367; G06F 30/373;** G06F 2119/10

(86) International application number:
**PCT/CN2023/119850**

(87) International publication number:
**WO 2024/087948 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022 CN 202211310423**

(71) Applicant: **Chongqing Changan Automobile Co., Ltd.**
**Chongqing 400023 (CN)**

(72) Inventors:
• **YE, Shangbin**
  **Chongqing 400023 (CN)**
• **TAN, Ruoxi**
  **Chongqing 400023 (CN)**
• **ZHONG, Haibing**
  **Chongqing 400023 (CN)**
• **DU, Changhong**
  **Chongqing 400023 (CN)**
• **DENG, Qingpeng**
  **Chongqing 400023 (CN)**

(74) Representative: **Schulz Junghans**
**Patentanwälte PartGmbB**
**Großbeerenstraße 71**
**10963 Berlin (DE)**

(54) **PASSIVE-DEVICE IMPEDANCE FITTING METHOD AND APPARATUS, AND ELECTRONIC DEVICE AND STORAGE MEDIUM**

(57) Provided are a passive-device impedance fitting method and apparatus, and an electronic device and a storage medium. The method comprises: acquiring an impedance characteristic curve obtained by means of actual measurement; dividing the impedance characteristic curve to obtain M resonant wavebands arranged in sequence, wherein an impedance model corresponding to a wide resonant peak is p groups of RLC parallel circuits that are connected in series, p being an integer greater than or equal to 2; performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model; and obtaining an equivalent impedance model for replacing a passive device based on the model parameters of the impedance models respectively corresponding to the M resonant wavebands. Therefore, accurate expression of the impedance of the passive device can be realized, thereby facilitating an electromagnetic-interference suppression design based on an equivalent impedance model.

Fig. 2

# Description

## Field of the Invention

The present disclosure relates to the technical field of electronic component modeling, and in particular, to a passive-device impedance fitting method and apparatus, and an electronic device and a storage medium.

## Background of the Invention

In the field of electronic components, there is a design requirement for electromagnetic compatibility. For example, in the field of new energy vehicles, especially for fuel cell vehicles, high-power power electronic devices generate strong electromagnetic interference during operation, which affects the normal operation of surrounding sensitive devices and threatens the safety of vehicle operation. From the perspective of electromagnetic compatibility management and design, it is necessary to model the conducted interference of a device to pre-estimate system noise. Passive-device impedance is an important component of conducted interference modeling. An impedance behavioral model selects a proper port equivalent model to describe an impedance characteristic, which has the characteristics of high accuracy and high applicability in a wide frequency range, and is suitable for simulating a conducted noise circuit.

The impedance behavioral model is usually composed of a resistor-inductor-capacitor (RLC) hybrid network. After a model topology is determined, accurate model parameters cannot be obtained, so that there is a significant difference between an impedance characteristic curve of a simulated circuit model and an impedance characteristic curve of an actual circuit, which makes it difficult to effectively design electromagnetic interference suppression. At present, a parameter extraction method based on vector fitting requires solving the least squares of an overdetermined system of equations and calculating a conjugate residue of an auxiliary function. This process easily has non-convergence in the solution. In addition, in the parameter extraction based on vector fitting, there may be negative results, which may bring an additional problem such as non-convergence to circuit simulation calculation and still have significant limitations in engineering practice.

## Summary of the Invention

In view of this, the embodiments of the present application aim to provide a passive-device impedance fitting method and apparatus, and an electronic device and a storage medium, which can improve a problem that electromagnetic interference suppression cannot be effectively performed because of a significant difference between an impedance characteristic curve of an equivalent impedance model of a passive device and an impedance characteristic curve of an actual circuit.

In order to achieve the above technical objectives, the present application adopts the following technical solutions:

In a first aspect, an embodiment of the present application provides a passive-device impedance fitting method, including:

> obtaining an impedance characteristic curve obtained by actually measuring a passive device;

> dividing the impedance characteristic curve into M resonant wavebands arranged in sequence, wherein each of the M resonant wavebands has a conventional resonant peak or a wide resonant peak, and M is an integer greater than or equal to 1;

> determining an impedance model corresponding to each of the M resonant wavebands and an initial parameter of the impedance model, wherein an impedance model corresponding to the conventional resonant peak is a resistor-inductor-capacitor (RLC) parallel circuit, and an impedance model corresponding to the wide resonant peak is p RLC parallel circuits that are connected in series, and p is an integer greater than or equal to 2;

> for an impedance model corresponding to an i-th resonant waveband, performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence; and

> obtaining an equivalent impedance model for replacing the passive device based on the model parameters of the impedance models respectively corresponding to the M resonant wavebands.

In conjunction with the first aspect, in some optional implementations, the method further includes:

> determining, based on an RLC parameter of the equivalent impedance model, a suppression parameter for suppressing electromagnetic interference of the equivalent impedance model, wherein the suppression parameter includes a resistance parameter, a capacitance parameter, and an inductance parameter; and

> suppressing the electromagnetic interference of the equivalent impedance model through a suppression circuit formed by the suppression parameter.

In conjunction with the first aspect, in some optional implementations, the determining an impedance model corresponding to each of the M resonant wavebands and an initial parameter of the impedance model includes:

when any resonant waveband is a waveband with a conventional resonant peak, determining the impedance model of the any resonant waveband as an RLC parallel circuit; and

determining a resistance value, a capacitance value, and an inductance value of the RLC parallel circuit of the any resonant waveband as the initial parameter according to a peak value, a frequency point, and a preset algorithm of the any resonant waveband.

In conjunction with the first aspect, in some optional implementations, the determining an impedance model corresponding to each of the M resonant wavebands and an initial parameter of the impedance model includes:

when any resonant waveband is a waveband with a wide resonant peak, determining the impedance model of the any resonant waveband as p RLC parallel circuits; and

determining a resistance value, a capacitance value, and an inductance value of the p RLC parallel circuits of the any resonant waveband as an equivalent parameter according to a peak value, a frequency point, and a preset algorithm of the any resonant waveband, and splitting the equivalent parameter into p groups of parameters used as initial parameters corresponding to the RLC parallel circuits, wherein a sum of similar parameters in the p groups of initial parameters is equal to a similar parameter in the equivalent parameter.

In conjunction with the first aspect, in some optional implementations, the performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model includes:

when the i-th resonant waveband is a waveband with a conventional resonant peak, selecting a plurality of groups of parameters at equal intervals from the optimization floating range through the optimization algorithm based on the initial parameter of the i-th impedance model and the corresponding optimization floating range;

performing optimization fitting on each group of RLC parameters in the plurality of groups of parameters to obtain a fitted curve and a group of RLC parameters with a minimum error with respect to the i-th resonant waveband, wherein the group of RLC parameters with the minimum error is used as an initial parameter for next optimization; and

repeatedly performing execution from the step of selecting a plurality of groups of RLC parameters at equal intervals from the optimization floating range through the optimization algorithm based on a group of RLC parameters obtained by each optimization and having a minimum error, and the corresponding optimization floating range to the step of performing optimization fitting on each group of RLC parameters in the plurality of groups of RLC parameters to obtain a new fitted curve and a group of RLC parameters with a minimum error with respect to the i-th resonant waveband, stopping the iteration until the error of a group of RLC parameters with a minimum error is less than the set value, and determining the group of RLC parameters with the minimum error as the model parameter.

In conjunction with the first aspect, in some optional implementations, the method further includes: when the i-th resonant waveband is a last waveband with a conventional resonant peak, performing joint optimization on the initial parameters of last two RLC parallel circuits corresponding to the M resonant wavebands and the corresponding optimization floating ranges through the optimization algorithm, and using corresponding RLC parameters that are obtained by optimization and have a minimum error with respect to an actual parameter, with the error being less than a set value, as model parameters of the last two RLC parallel circuits.

In conjunction with the first aspect, in some optional implementations, the performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model includes:

when the i-th resonant waveband is a waveband with a wide resonant peak, selecting a plurality of groups of parameters at equal intervals from the optimization floating range through the preset optimization algorithm based on the initial parameter of each RLC parallel circuit of the i-th impedance model and the corresponding optimization floating range;

performing optimization fitting on each group of RLC parameters in the plurality of groups of parameters to obtain a fitted curve and an RLC parameter, having a minimum error, of each RLC parallel circuit of the i-th resonant waveband, wherein the RLC parameter, having the minimum error, of each RLC parallel circuit is used as an initial parameter for next optimization; and

repeatedly performing execution from the step of selecting a plurality of groups of RLC parameters at equal intervals from the optimization floating range through the optimization algorithm based on the RLC parameter, obtained by each optimization and having a minimum error, of each RLC parallel circuit and the corresponding optimization floating range to the step of performing optimization fitting on each group of RLC parameters in the plurality of groups of RLC parameters to obtain a new fitted curve and an RLC parameter, having a minimum error, of each RLC parallel circuit of the i-th resonant waveband, stopping the iteration until the error of an RLC parameter, having a minimum error, of each RLC parallel circuit is less than the set value, and determining the RLC parameter, having the minimum error, of each group of RLC parameters as the model parameter.

In conjunction with the first aspect, in some optional implementations, the passive device includes at least one of a motor, a resistor, a capacitor, an inductor, and a converter.

In conjunction with the first aspect, in some optional implementations, the RLC parallel circuit includes a resistor, a capacitor, and an inductor, and the resistor, the capacitor, and the inductor are connected in parallel.

In a second aspect, an embodiment of the present application further provides a passive-device impedance fitting apparatus, including:

an obtaining unit, configured to obtain an impedance characteristic curve obtained by actually measuring a passive device;

a division unit, configured to divide the impedance characteristic curve into M resonant wavebands arranged in sequence, wherein each of the M resonant wavebands has a conventional resonant peak or a wide resonant peak, and M is an integer greater than or equal to 1;

a determining unit, configured to determine an impedance model corresponding to each of the M resonant wavebands and an initial parameter of the impedance model, wherein an impedance model corresponding to the conventional resonant peak is a resistor-inductor-capacitor (RLC) parallel circuit, and an impedance model corresponding to the wide resonant peak is p RLC parallel circuits that are connected in series, and p is an integer greater than or equal to 2;

an optimization unit, configured to: for an impedance model corresponding to an i-th resonant waveband, perform iterative optimization through a preset optimization algorithm based on the initial parameter of an i-th impedance model and a corresponding optimization floating range, and use a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence; and

a simulation unit, configured to obtain an equivalent impedance model for replacing the passive device based on the model parameters of the impedance models respectively corresponding to the M resonant wavebands.

In a third aspect, an embodiment of the present application further provides an electronic device, including a processor and a memory that are coupled to each other, wherein the memory has a computer program stored therein; and the computer program, when executed by the processor, causes the electronic device to perform the above method.

In a fourth aspect, an embodiment of the present application further provides a computer-readable storage medium, having a computer program stored therein, wherein the computer program, when executed on a computer, causes the computer to perform the above method.

This disclosure using the above technical solutions has the following advantages:

In the technical solutions of the present application, an impedance model is determined for each resonant waveband of an impedance characteristic curve of the passive device. An impedance model corresponding to a conventional resonant peak is an RLC parallel circuit, and an impedance model corresponding to a wide resonant peak is at least two RLC parallel circuits that are connected in series. Then, iterative optimization is performed through a preset optimization algorithm based on an initial parameter of an i-th impedance model and a corresponding optimization floating range, and a group of parameters obtained by optimization is used as a model parameter of the i-th impedance model, parameters and an actual parameter being minimum, and the error being less than a set value. The actual parameter is an RLC parameter of the i-th resonant waveband. An equivalent impedance model for replacing the passive device is obtained based on the model parameters of impedance models respectively corresponding to M resonant wavebands. Therefore, an error between an impedance characteristic curve of the equivalent impedance model and an impedance characteristic curve of an actual circuit of the passive device is small, and accurate expression of the impedance of a passive device can be realized, thereby facilitating an electromagnetic-interference suppression design based on an equivalent impedance model.

## Brief Description of the Drawings

The present application can further describe non-restrictive embodiments provided through accompanying drawings. It should be understood that the accompanying drawings below only show some embodiments of the present application. Therefore, the embodiments shall not be regarded as limitations on the scope. A person of ordinary skill in the art can also derive other relevant drawings according to these drawings without creative work.

Fig. 1 is a schematic circuit diagram of an equivalent impedance model according to an embodiment of the present application.

Fig. 2 is a flowchart of a passive-device impedance fitting method according to an embodiment of the present application.

Fig. 3 is a schematic diagram I of a fitting optimization result according to an embodiment of the present application.

Fig. 4 is a schematic diagram II of a fitting optimization result according to an embodiment of the present application.

Fig. 5 is a schematic diagram III of a fitting optimization result according to an embodiment of the present application.

Fig. 6 is a block diagram of a passive-device impedance fitting apparatus according to an embodiment of the present application.

Numerals: 200: passive-device impedance fitting apparatus; 210: obtaining unit; 220: division unit; 230: determining unit; 240: optimization unit; and 250: simulation unit.

## Detailed Description of the Embodiments

The following will make a detailed explanation on the present application in conjunction with the accompanying drawings and specific embodiments. It should be noted that in the accompanying drawings or description of this specification, similar or identical parts are labeled with the same numerals. Implementation not shown or described in the accompanying drawings are forms known to those of ordinary skill in the art. In the descriptions of the present application, the terms "first", "second", and the like are only for the purpose of distinguishing the description, and may not be understood as indicating or implying the relative importance.

An embodiment of the present application provides an electronic device, which may include a processing module and a memory module. A computer program is stored in the storage module. The computer program, when executed by the processing module, causes the electronic device to execute corresponding steps in the following passive-device impedance fitting method. The electronic device may be, but not limited to, a personal computer, a server, or another device.

In this embodiment, the electronic device may calculate an equivalent impedance model for replacing a passive device and an RLC parameter corresponding to the equivalent impedance model based on an impedance characteristic curve of the passive device.

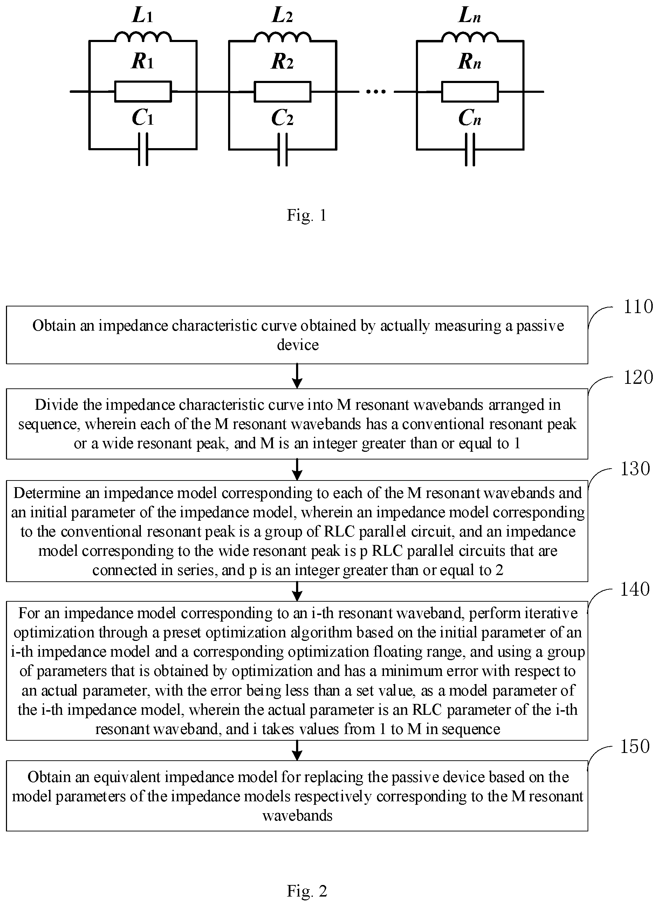

Referring to Fig. 1, a circuit of an equivalent impedance model of a passive device may be as shown in Fig. 1. The equivalent impedance model may include n RLC parallel circuits that are connected in series, and n may be determined according to an actual situation. Each RLC parallel circuit may be regarded as an RLC unit. An RLC unit may include a resistor, an inductor, and a capacitor. The resistor, the inductor, and the capacitor are connected in parallel. For example, in Fig. 1, a resistor R1, an inductor L1, and a capacitor C1 are connected in parallel to form an RLC unit.

In this embodiment, the passive device may include at least one of a motor, a resistor, a capacitor, an inductor, and a converter.

Referring to Fig. 2, the present application further provides a passive-device impedance fitting method, which may be applied to the above electronic device, and the electronic device executes or implements steps of the method. The passive-device impedance fitting method may include the following steps:

Step 110: Obtain an impedance characteristic curve obtained by actually measuring a passive device.

Step 120: Divide the impedance characteristic curve into M resonant wavebands arranged in sequence, wherein each of the M resonant wavebands has a conventional resonant peak or a wide resonant peak, and M is an integer greater than or equal to 1.

Step 130: Determine an impedance model corresponding to each of the M resonant wavebands and an initial parameter of the impedance model, wherein an impedance model corresponding to the conventional resonant peak is a link control (RLC) parallel circuit, and an impedance model corresponding to the wide resonant peak is p RLC parallel circuits that are connected in series, and p is an integer greater than or equal to 2.

Step 140: For an impedance model corresponding to an i-th resonant waveband, perform iterative optimization through a preset optimization algorithm based on the initial parameter of an i-th impedance model and a corresponding optimization floating range, and use a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence.

Step 150: Obtain an equivalent impedance model for replacing the passive device based on the model parameters of the impedance models respectively corresponding to the M resonant wavebands.

The following will make a detailed explanation to the steps of the passive-device impedance fitting method as follows:
In step 110, a method used by the electronic device to obtain the impedance characteristic curve of the passive device may be flexibly determined according to an actual situation. For example, the impedance characteristic curve is pre-recorded in the storage module of the electronic device, or the electronic device may obtain the impedance characteristic curve obtained by actually measuring the passive device by a detection device. The detection device is a conventional device for detecting the impedance characteristic curve, and a detection method is conventional.

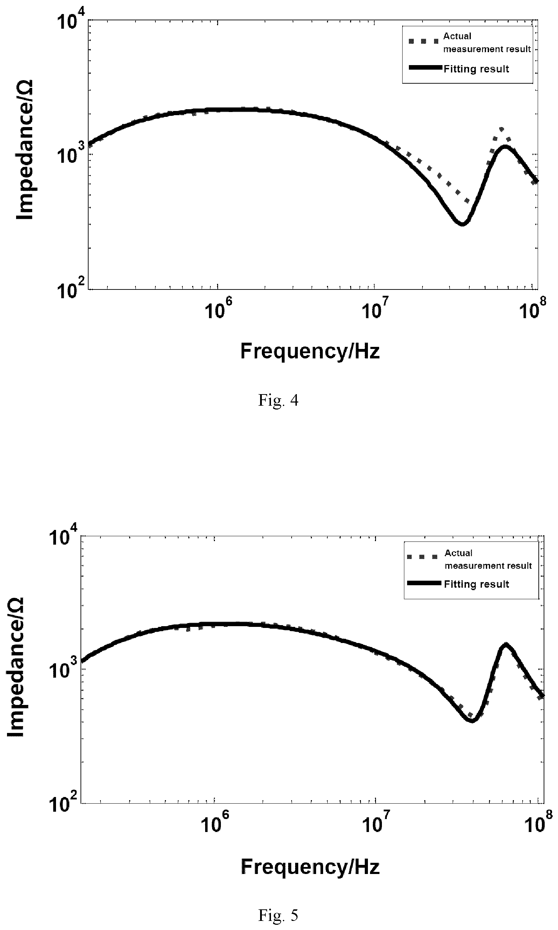

It can be understood that the impedance characteristic curve of the passive device typically has a plurality of resonant wavebands, each of which may be understood as a waveband with a resonant peak. For example, in the impedance characteristic curve shown in Fig. 4, a curve corresponding to the dashed line is the impedance characteristic curve obtained by actually measuring the passive device. In Fig. 4, there are two resonant wavebands.

In step 120, the electronic device may use valley points of valleys of the impedance characteristic curve as division points, and then use the valley points to divide the impedance characteristic curve into M resonant wavebands arranged in sequence. M may be flexibly determined according to an actual situation.

In step 130, for each resonant waveband obtained by division, the electronic device may determine the corresponding impedance model and the initial parameter of the impedance model for the resonant waveband. An impedance model corresponding to the i-th resonant waveband (or an i-th resonant peak) is the i-th impedance model. If a resonant waveband is a waveband with a conventional resonant peak, the impedance model of this resonant waveband is an RLC parallel circuit. If a resonant waveband is a waveband with a wide resonant peak, the impedance model of this resonant waveband is p RLC parallel circuit connected in series, wherein p is an integer greater than or equal to 2 and may be flexibly determined according to an actual situation.

In the impedance characteristic curve, a method for detecting a conventional resonant peak and a wide resonant peak is a conventional method. For example, in two resonant wavebands shown in Fig. 4, a peak with a wide waveband (namely, the peak is gentle) is a wide resonant peak, and a peak with a narrow waveband (namely, the peak is sharp) is a conventional resonant peak.

The initial parameter of the impedance model of each resonant waveband may be determined by a peak value of that resonant waveband.

In an optional implementation, step 130 may include:

when any resonant waveband is a waveband with a conventional resonant peak, determining the impedance model of the any resonant waveband as an RLC parallel circuit; and
determining a resistance value, a capacitance value, and an inductance value of the RLC parallel circuit of the any resonant waveband as the initial parameter according to a peak value, a frequency point, and a preset algorithm of the any resonant waveband.

During the determination of the initial parameter of the impedance model, the preset algorithm may be flexibly determined according to an actual situation, and a corresponding formula may be as follows. For example, if an impedance model is an RLC parallel circuit, in the equivalent circuit model, a theoretical expression of a port impedance is as follows:

$$Z = \sum_{i=1}^{N} \frac{j\omega R_i L_i}{R_i - \omega^2 R_i L_i C_i + j\omega L_i} \quad (1)$$

In formula (1), Z represents an impedance of the equivalent circuit model; N represents a total quantity of RLC parallel circuits; $R_i$ represents a resistance value of an i-th RLC parallel circuit; $L_i$ represents an inductance value of the i-th RLC parallel circuit; and $C_i$ represents a capacitance value of the i-th RLC parallel circuit.

A frequency point of the i-th resonant peak in the impedance characteristic curve is denoted as $f_{pi}$; a peak impedance value of the resonant peak is denoted as an initial value of $R_i$; and an i-th resonant valley point is denoted as $f_{bi}$. Then, a plurality of frequency points in a low-frequency linear segment of the impedance characteristic curve are selected, and $L_i$ is calculated according to the following formula:

$$L_i = |Z|/(2\pi f_{pi}) \quad (2)$$

An average value calculated by using the plurality of frequency points is used as an initial value of $L_i$,

and then an initial value of $C_i$ and $L_{i+1}$ are calculated respectively according to the following formulas.

$$C_i = 1/(2\pi f_{pi})^2 L_i \quad (3)$$

$$L_{i+1} = 1/(2\pi f_{bi})^2 C_i \quad (4)$$

Based on the above formulas, the initial parameter of the impedance model corresponding to the i-th resonant waveband may be determined. That is, the initial parameter of this group of RLC parameters includes the initial value of $R_i$, the initial value of $L_i$, and the initial value of $C_i$.

In an optional implementation, step 130 may include:

when any resonant waveband is a waveband with a wide resonant peak, determining the impedance model of the any resonant waveband as p RLC parallel circuits; and

determining a resistance value, a capacitance value, and an inductance value of the p RLC parallel circuits of the any resonant waveband as an equivalent parameter according to a peak value, a frequency point, and a preset algorithm of the any resonant waveband, and splitting the equivalent parameter into p groups of parameters used as initial parameters corresponding to the RLC parallel circuits, wherein a sum of similar parameters in the p groups of initial parameters is equal to a similar parameter in the equivalent parameter.

If a resonant waveband is a waveband with a wide resonant peak, the impedance model may be two RLC parallel circuits. An example is taken to explain the calculation process of the initial parameter, as follows: First, the same calculation method for the initial parameter of the impedance model with the conventional resonant peak is used to calculate a group of the initial value of $R_i$, the initial value of $L_i$, and the initial value of $C_i$ as equivalent parameters $[C_i R_i L_i]$. In this case, the initial value of $R_i$ is the peak value of the wide resonant peak. The initial value of $L_i$ and the initial value of $C_i$ may be respectively calculated by using formula (2) and formula (3) mentioned above. Then, the calculated equivalent parameters $[C_i R_i L_i]$ are split into two groups of parameters as the initial parameters corresponding to each RLC parallel circuit, and are respectively denoted as $[C_{i1} R_{i1} L_{i1}]$ and $[C_{i2} R_{i2} L_{i2}]$. A resonance point of the wide resonant peak is denoted as $f_{wpi}$, and a corresponding resonance valley point is denoted as $f_{bi}$. The split parameters should satisfy $L_{i1}+L_{i2}=L_i$, $R_{i1}+R_{i2}=R_i$, and $L_{i1}>L_{i2}$, $R_{i1}>R_{i2}$.

Since the set initial values of the parameters are only used as preliminary benchmark values for optimization, parameter extraction may ultimately be achieved through iterative optimization. Therefore, the initial values do not need to meet high accuracy. After the initial parameter is obtained, the electronic device may perform iterative optimization on the initial parameter of each RLC parallel circuit through step 140.

In an optional implementation, step 140 may include:

when the i-th resonant waveband is a waveband with a conventional resonant peak, selecting a plurality of groups of parameters at equal intervals from the optimization floating range through the optimization algorithm based on the initial parameter of the i-th impedance model and the corresponding optimization floating range;

performing optimization fitting on each group of RLC parameters in the plurality of groups of parameters to obtain a fitted curve and a group of RLC parameters with a minimum error with respect to the i-th resonant waveband, wherein the group of RLC parameters with the minimum error is used as an initial parameter for next optimization; and

repeatedly performing execution from the step of selecting a plurality of groups of RLC parameters at equal intervals from the optimization floating range through the optimization algorithm based on a group of RLC parameters obtained by each optimization and having a minimum error, and the corresponding optimization floating range to the step of performing optimization fitting on each group of RLC parameters in the plurality of groups of RLC parameters to obtain a new fitted curve and a group of RLC parameters with a minimum error with respect to the i-th resonant waveband, stopping the iteration until the error of a group of RLC parameters with a minimum error is less than the set value, and determining the group of RLC parameters with the minimum error as the model parameter.

In this embodiment, the optimization floating range is a floating range above and below the initial parameter, and may be flexibly determined according to an actual situation. For example, the optimization floating range may be ± 60% of the initial parameter, ± 80% of the initial parameter, or the like.

For the conventional resonant peak, if the initial parameters are $[C_i R_i L_i]$ and variables involved in optimization are $[C_i L_i]$, the optimization floating range of $C_i$ may be from $(1-80\%) \cdot C_i$ to $(1+80\%) \cdot C_i$, and the optimization floating range of $L_i$ may be from $(1-80\%) \cdot L_i$ to $(1+80\%) \cdot L_i$. According to the optimization floating range for each type of parameter, a plurality of groups of parameters may be selected at equal intervals from the optimization floating range, to obtain a plurality of groups of RLC parameters. For example, there may be 20 groups of RLC parameters selected. Then, for each group of RLC parameters, impedance characteristic curve fitting is performed by using a circuit simulation tool to obtain the impedance characteristic curve corresponding to each group of RLC parameters. Next, by performing error comparison on the fitted impedance characteristic curve and an actually measured curve of the resonant waveband, an error of each group of RLC parameters may be obtained; and a group of RLC parameters with a minimum error is selected. If the error of the group of RLC parameters with the minimum error is less than the set value, the group of RLC parameters is the model parameter of the i-th impedance model. The set value may be flexibly determined according to an actual situation.

If the error of the group of RLC parameter with the minimum error exceeds the set value, the group of RLC parameter with the minimum error is used as an initial parameter for next optimization. Then, 20 groups of RLC parameters may be selected at equal intervals based on the new initial parameter and a corresponding optimization floating range (the optimization floating range of the new initial parameter may be less than the previous optimization floating range). Then, for each group of RLC parameters, impedance characteristic curve fitting is performed by using the circuit simulation tool. The iteration is stopped until the error of the group of RLC parameters with the minimum error is less than the set value, or the iteration is stopped when a number of iterations reaches a specified number. The specified number may be flexibly determined according to an actual situation. For example, the specified number may be 3, 5, or the like.

In an optional implementation, step 140 may include:

when the i-th resonant waveband is a waveband with a wide resonant peak, selecting a plurality of groups of parameters at equal intervals from the optimization floating range through the preset optimization algorithm based on the initial parameter of each RLC parallel circuit of the i-th impedance model and the corresponding optimization floating range;

performing optimization fitting on each group of RLC parameters in the plurality of groups of parameters to obtain a fitted curve and an RLC parameter, having a minimum error, of each RLC parallel circuit of the i-th resonant waveband, wherein the RLC parameter, having the minimum error, of each RLC parallel circuit is used as an initial parameter for next optimization; and

repeatedly performing execution from the step of selecting a plurality of groups of RLC parameters at equal intervals from the optimization floating range through the optimization algorithm based on the RLC parameter, obtained by each optimization and having a minimum error, of each RLC parallel circuit and the corresponding optimization floating range to the step of performing optimization fitting on each group of RLC parameters in the plurality of groups of RLC parameters to obtain a new fitted curve and an RLC parameter, having a minimum error, of each RLC parallel circuit of the i-th resonant waveband, stopping the iteration until the error of an RLC parameter, having a minimum error, of each RLC parallel circuit is less than the set value, and determining the RLC parameter, having the minimum error, of each group of RLC parameters as the model parameter.

For the wide resonant peak, assuming that the impedance model (referred to as the i-th impedance model) corresponding to the wide resonant peak is two RLC parallel circuits, if the initial equivalent parameters are $[C_i\ R_i\ L_i]$ and variables involved in optimization are $[C_{i1}\ R_{i1}\ L_{i1}\ C_{i2}\ R_{i2}\ L_{i2}]$. Then, 20 groups of different parameters $[C_{i1}\ R_{i1}\ L_{i1}\ C_{i2}\ R_{i2}\ L_{i2}]$ are selected based on the optimization floating range of each RLC parallel circuit for joint optimization. That is, for the 20 groups of RLC parameters, for each group of RLC parameters, impedance characteristic curve fitting is performed by using a circuit simulation tool to obtain the impedance characteristic curve corresponding to each group of RLC parameters. Next, by performing error comparison on the fitted impedance characteristic curve and an actually measured curve of the resonant waveband, an error of each group of RLC parameters may be obtained; and a group of RLC parameters with a minimum error is selected. If the error of the group of RLC parameters with the minimum error is less than the set value, the group of RLC parameters is the model parameter of the i-th impedance model. The set value may be flexibly determined according to an actual situation.

If the error of the group of RLC parameters with the minimum error exceeds the set value, the group of RLC parameters with the minimum error is used as an initial parameter for next optimization, and iterative optimization continues. The iteration is stopped until the error of the RLC parameter, having the minimum error, of each RLC parallel circuit is less than the set value, or when a number of iterations reaches a specified number.

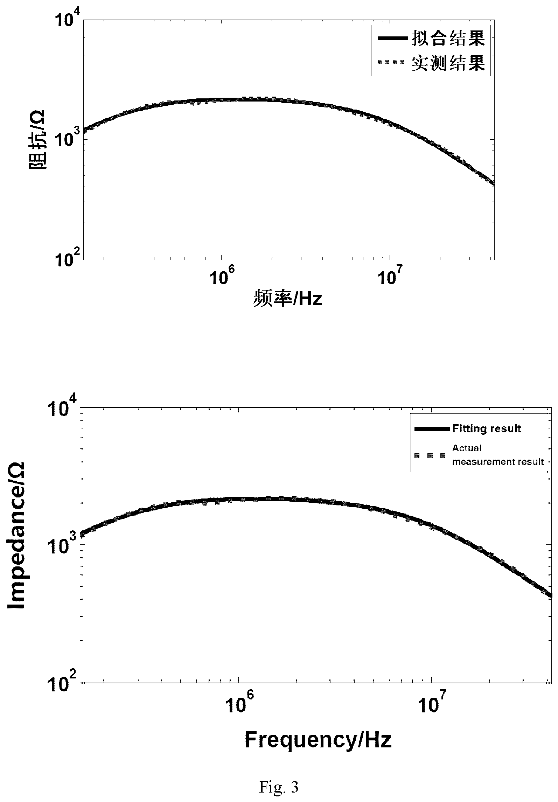

In step 150, the model parameters of the impedance models of the M resonant wavebands are respectively substituted into the corresponding impedance models, so that the equivalent impedance model of the passive device may be obtained. In this case, an error between the impedance characteristic curve obtained by simulation of the equivalent impedance model and the impedance characteristic curve obtained by actually measuring the passive device is small. Referring to Fig. 3, Fig. 4, and Fig. 5, Fig. 3 is a schematic diagram of a fitted curve and an actually measured curve of a wide resonant peak; Fig. 4 is a schematic diagram of a fitted curve and an actually measured curve when joint optimization is not used; and Fig. 5 is a schematic diagram of a fitted curve and an actually measured curve when joint optimization is used.

In this embodiment, the method may further include:

determining, based on an RLC parameter of the equivalent impedance model, a suppression parameter for suppressing electromagnetic interference of the equivalent impedance model, wherein the suppression parameter includes a resistance parameter, a capacitance parameter, and an inductance parameter; and

suppressing the electromagnetic interference of the equivalent impedance model through a suppression circuit formed by the suppression parameter.

It can be understood that after the equivalent impedance model of the passive device is obtained, a simulation test may be carried out based on the equivalent impedance model to calculate the suppression parameter for suppressing the electromagnetic interference of the equivalent impedance model. A calculation method is a conventional method and will not be elaborated herein.

After the suppression parameter is obtained, the corresponding suppression circuit may be built based on the suppression parameter, and then the electromagnetic interference of the equivalent impedance model may be suppressed by using the suppression circuit, which is beneficial for achieving electromagnetic compatibility of a circuit.

Based on the above design, automatic optimization calculation of the parameters of the equivalent circuit model of the passive device may be achieved, and the impedance accuracy of simulation and actual measurement can reach 90% or above. Meanwhile, programmed automatic iterative optimization may be used to replace traditional manual optimization, which saves the time for manual adjustment. The method of the present application may use the equivalent impedance model to pre-estimate an effect of a noise coupling path, thereby avoiding problems such as high sample rectification costs and long rectification cycle, achieving accurate expression of the impedance of the passive device, reducing the dependency on the experience of an engineer and labor costs, providing reliable electromagnetic interference suppression measures for different application environments, and avoiding systematic over-design of electrical component filtering.

In this embodiment, the method may further include: when the i-th resonant waveband is a last waveband with a conventional resonant peak, performing joint optimization on the initial parameters of last two RLC parallel circuits corresponding to the M resonant wavebands and the corresponding optimization floating ranges through the optimization algorithm, and using corresponding RLC parameters that are obtained by optimization and have a minimum error with respect to an actual parameter, with the error being less than a set value, as model parameters of the last two RLC parallel circuits.

Due to the cumulative nature of an optimization error, optimization results of the last two groups of RLC parameters in M impedance models are not accurate enough, so that a high-frequency impedance still has an error. In this case, other RLC parameters (meaning parameters other than the last two groups of RLC parameters) may be fixed, and the joint optimization may be performed on the last two groups of RLC parameters. Variables include $[N_{i-1} R_{i-1} L_{i-1} C_i R_i L_i]$. Due to a large number of variables involved in the joint optimization, a point density can be reduced, meaning that a quantity of RLC parameters selected within the optimization floating range may be set to 5 to 20, with a floating range of $\pm$ 40%. For the accuracy of the parameters, a result of each instance of joint optimization may be reset to be an initial parameter for next optimization, and then a plurality of instances of iterative optimization may be performed. The optimization process is completed until a change in the errors of the last two instances of iteration is less than the set value. The implementation process of the joint optimization is similar to the optimization process when the impedance model corresponding to the wide resonant peak is two RLC parallel circuits, and will not be elaborated herein.

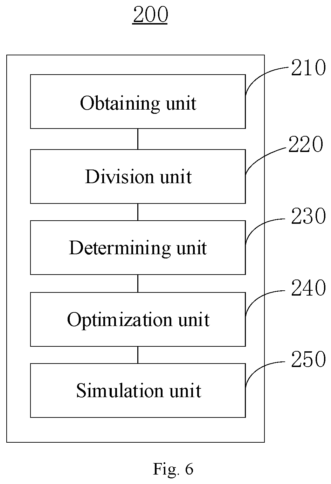

Referring to Fig. 6, the present application further provides a passive-device impedance fitting apparatus 200. The passive-device impedance fitting apparatus 200 includes at least one software functional module that may be stored in a storage module or solidified in an operating system (OS) in the form of software or firmware. A processing module is configured to execute an executable module stored in the storage module, such as the software functional module included in the passive-device impedance fitting apparatus 200, and a computer program.

The passive-device impedance fitting apparatus 200 includes an obtaining unit 210, a division unit 220, a determining unit 230, an optimization unit 240, and a simulation unit 250. The units may have the following functions:

The obtaining unit 210 is configured to obtain an impedance characteristic curve obtained by actually measuring a passive device.

The division unit 220 is configured to divide the impedance characteristic curve into M resonant wavebands arranged in sequence, wherein each of the M resonant wavebands has a conventional resonant peak or a wide resonant peak, and M is an integer greater than or equal to 1.

The determining unit 230 is configured to determine an impedance model corresponding to each of the M resonant wavebands and an initial parameter of the impedance model, wherein an impedance model corresponding to the conventional resonant peak is a resistor-inductor-capacitor (RLC) parallel circuit, and an impedance model corresponding to the wide resonant peak is p RLC parallel circuits that are connected in series, and p is an integer greater than or equal to 2.

The optimization unit 240 is configured to: for an impedance model corresponding to an i-th resonant waveband, perform iterative optimization through a preset optimization algorithm based on the initial parameter of an i-th impedance model and a corresponding optimization floating range, and use a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence.

The simulation unit 250 is configured to obtain an equivalent impedance model for replacing the passive device based on the model parameters of the impedance models respectively corresponding to the M resonant wavebands.

Optionally, the passive-device impedance fitting apparatus 200 may further include a suppression parameter determining unit 230 and a suppression unit. The suppression parameter determining unit 230 is configured to determine, based on an RLC parameter of the equivalent impedance model, a suppression parameter for suppressing electromagnetic interference of the equivalent impedance model, wherein the suppression parameter includes a resistance parameter, a capacitance parameter, and an inductance parameter.

The suppression unit is configured to suppress the electromagnetic interference of the equivalent impedance model through a suppression circuit formed by the suppression parameter.

Optionally, the determining unit 230 may be configured to:

when any resonant waveband is a waveband with a conventional resonant peak, determine the impedance model of the any resonant waveband as an RLC parallel circuit; and

determine a resistance value, a capacitance value, and an inductance value of the RLC parallel circuit of the any resonant waveband as the initial parameter according to a peak value, a frequency point, and a preset algorithm of the any resonant waveband.

Optionally, the determining unit 230 may be further configured to:

when any resonant waveband is a waveband with a wide resonant peak, determine the impedance model of the any resonant waveband as p RLC parallel circuits; and

determine a resistance value, a capacitance value, and an inductance value of the p RLC parallel circuits of the any resonant waveband as an equivalent parameter according to a peak value, a frequency point, and a preset algorithm of the any resonant waveband, and splitting the equivalent parameter into p groups of parameters used as initial parameters corresponding to the RLC parallel circuits, wherein a sum of similar parameters in the p groups of initial parameters is equal to a similar parameter in the equivalent parameter.

Optionally, the optimization unit 240 is configured to:

when the i-th resonant waveband is a waveband with a conventional resonant peak, select a plurality of groups of parameters at equal intervals from the optimization floating range through the optimization algorithm based on the initial parameter of the i-th impedance model and the corresponding optimization floating range;

perform optimization fitting on each group of RLC parameters in the plurality of groups of parameters to obtain a fitted curve and a group of RLC parameters with a minimum error with respect to the i-th resonant waveband, wherein the group of RLC parameters with the minimum error is used as an initial parameter for next optimization; and

repeatedly perform execution from the step of selecting a plurality of groups of RLC parameters at equal intervals from the optimization floating range through the optimization algorithm based on a group of RLC parameters obtained by each optimization and having a minimum error, and the corresponding optimization floating range to the step of performing optimization fitting on each group of RLC parameters in the plurality of groups of RLC parameters to obtain a new fitted curve and a group of RLC parameters with a minimum error with respect to the i-th resonant waveband, stop the iteration until the error of a group of RLC parameters with a minimum error is less than the set value, and determine the group of RLC parameters with the minimum error as the model parameter.

Optionally, the optimization unit 240 may be further configured to: when the i-th resonant waveband is a last waveband with a conventional resonant peak, perform joint optimization on the initial parameters of last two RLC parallel circuits corresponding to the M resonant wavebands and the corresponding optimization floating ranges through the optimization algorithm, and use corresponding RLC parameters that are obtained by optimization and have a minimum error with respect to an actual parameter, with the error being less than a set value, as model parameters of the last two RLC parallel circuits.

Optionally, the optimization unit 240 may be further configured to:

when the i-th resonant waveband is a waveband with a wide resonant peak, select a plurality of groups of parameters at equal intervals from the optimization floating range through the preset optimization algorithm based on the initial parameter of each RLC parallel circuit of the i-th impedance model and the corresponding optimization floating range;

perform optimization fitting on each group of RLC parameters in the plurality of groups of parameters to obtain a fitted curve and an RLC parameter, having a minimum error, of each RLC parallel circuit of the i-th resonant waveband, wherein the RLC parameter, having the minimum error, of each RLC parallel circuit is used as an initial parameter for next optimization; and

repeatedly perform execution from the step of selecting a plurality of groups of RLC parameters at equal intervals from the optimization floating range through the optimization algorithm based on the RLC parameter, obtained by each optimization and having a minimum error, of each RLC parallel circuit and the corresponding optimization floating range to the step of performing optimization fitting on each group of RLC parameters in the plurality of groups of RLC parameters to obtain a new fitted curve and an RLC parameter, having a minimum error, of each RLC parallel circuit of the i-th resonant waveband, stop the iteration until the error of an RLC parameter, having a minimum error, of each RLC parallel circuit is less than the set value, and determine the RLC parameter, having the minimum error, of each group of RLC parameters as the model parameter.

In this embodiment, the processing module may be an integrated circuit chip having a signal processing capability. The above processing module may be a general-purpose processor. For example, the processor may be a central processing unit (CPU), a digital signal processing (DSP), an application specific integrated circuit (ASIC), a field programmable gate array (FPGA), or other programmable logic devices, discrete gates, transistor logic devices, or discrete hardware components, which can implement or execute the methods, steps, and logic block diagrams in the embodiments of the present application.

The storage module may be, but is not limited to, a random access memory, a read-only memory, a programmable read-only memory, an erasable programmable read-only memory, an electrically erasable programmable read-only memory, or the like. In this embodiment, the storage module may be configured to store the impedance characteristic curve, the optimization algorithm, and the optimization floating range of the passive device. Certainly, the storage module may be further configured to store a program, and the processing module executes the program after receiving an execution instruction.

It should be noted that those skilled in the art can clearly understand that for ease and simplicity of description, the specific working process of the electronic device described above can be found in the corresponding processes of the steps in the aforementioned method, and will not be further elaborated here.

An embodiment of the present application further provides a computer-readable storage medium. The computer-readable storage medium has a computer program stored therein. The computer program, when executed on a computer, causes the computer to perform the passive-device impedance fitting method in the above embodiment.

Through the descriptions of the above implementations, those skilled in the art can clearly know that the present application can be implemented by hardware or can be implemented by software and a necessary general-purpose hardware platform. Based on this understanding, the technical solutions of the present application can be embodied in the form of a software product. The software product can be stored in a non-volatile storage medium (such as a compact disc-read only memory (CD-ROM), a USB flash disk (U disk), and a portable hard disk drive), including several instructions used for causing a computer device (which can be a personal computer, an electronic device, or a network device) to perform the methods of the various implementation scenarios of the present application.

In conclusion, the embodiments of the present application provide a passive-device impedance fitting method and apparatus, and an electronic device and a storage medium. In this solution, an impedance model is determined for each resonant waveband of an impedance characteristic curve of the passive device. An impedance model corresponding to a conventional resonant peak is an RLC parallel circuit, and an impedance model corresponding to a wide resonant peak is at least two RLC parallel circuits that are connected in series. Then, iterative optimization is performed through a preset optimization algorithm based on an initial parameter of an i-th impedance model and a corresponding optimization floating range, and a group of parameters obtained by optimization is used as a model parameter of the i-th impedance model, parameters and an actual parameter being minimum, and the error being less than a set value. The actual parameter is an RLC parameter of the i-th resonant waveband. An equivalent impedance model for replacing the passive device is obtained based on the model parameters of impedance models respectively corresponding to M resonant wavebands. Therefore, an error between an impedance characteristic curve of the equivalent impedance model and an impedance characteristic curve of an actual circuit of the passive device is small, and accurate expression of the impedance of a passive device can be realized, thereby facilitating an electromagnetic-interference suppression design based on an equivalent impedance model.

**In** the embodiments provided in the present application, it should be understood that the disclosed apparatus, system, and method may be implemented in other manners. The apparatus, system, and method embodiments described above are merely schematic. For example, flowcharts and block diagrams in the accompanying drawings show possible system architectures, functions, and operations of the system, method, and computer program product of a plurality of embodiments of the present application. In this regard, each block in a flowchart or a block diagram may represent a module, a program, or a part of a code. The module, the program, or the part of the code includes one or more executable instructions used for implementing specified logic functions. It should also be noted that each block in the block diagram or the flowchart and a combination of the blocks in the block diagram and/or the flowchart may be implemented by using a dedicated hardware-based system configured to perform a specified function or operation, or may be implemented by using a combination of dedicated hardware and computer instructions. In addition, functional modules in embodiments of the present application may be integrated into an independent part, or may exist alone, or two or more modules are integrated into an independent part.

The above descriptions are only embodiments of the present application, and are not intended to limit the present application. For those skilled in the art, the present application may have various modifications and changes. Any modification, equivalent replacement, and improvement made within the spirit and scope of the present application shall fall within the protection scope of the present application.

**Claims**

1. A passive-device impedance fitting method, comprising:

   obtaining an impedance characteristic curve obtained by actually measuring a passive device;
   dividing the impedance characteristic curve into M resonant wavebands arranged in sequence, wherein each of the M resonant wavebands has a conventional resonant peak or a wide resonant peak, and M is an integer greater than or equal to 1;
   determining an impedance model corresponding to each of the M resonant wavebands and an initial parameter of the impedance model, wherein an impedance model corresponding to the conventional resonant peak is a resistor-inductor-capacitor (RLC) parallel circuit, and an impedance model corresponding to the wide resonant peak is p RLC parallel circuits that are connected in series, and p is an integer greater than or equal to 2;
   for an impedance model corresponding to an i-th resonant waveband, performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence; and
   obtaining an equivalent impedance model for replacing the passive device based on the model parameters of the impedance models respectively corresponding to the M resonant wavebands.

2. The method according to claim 1, further comprising:

   determining, based on an RLC parameter of the equivalent impedance model, a suppression parameter for suppressing electromagnetic interference of the equivalent impedance model, wherein the suppression parameter comprises a resistance parameter, a capacitance parameter, and an inductance parameter; and
   suppressing the electromagnetic interference of the equivalent impedance model through a suppression circuit formed by the suppression parameter.

3. The method according to claim 1, wherein the determining an impedance model corresponding to each of the M resonant wavebands and an initial parameter of the impedance model comprises:

   when any resonant waveband is a waveband with a conventional resonant peak, determining the impedance model of the any resonant waveband as an RLC parallel circuit; and
   determining a resistance value, a capacitance value, and an inductance value of the RLC parallel circuit of the any resonant waveband as the initial parameter according to a peak value, a frequency point, and a preset algorithm of the any resonant waveband.

4. The method according to claim 1, wherein the determining an impedance model corresponding to each of the M resonant wavebands and an initial parameter of the impedance model comprises:

when any resonant waveband is a waveband with a wide resonant peak, determining the impedance model of the any resonant waveband as p RLC parallel circuits; and

determining a resistance value, a capacitance value, and an inductance value of the p RLC parallel circuits of the any resonant waveband as an equivalent parameter according to a peak value, a frequency point, and a preset algorithm of the any resonant waveband, and splitting the equivalent parameter into p groups of parameters used as initial parameters corresponding to the RLC parallel circuits, wherein a sum of similar parameters in the p groups of initial parameters is equal to a similar parameter in the equivalent parameter.

5. The method according to claim 1, wherein the performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model comprises:

when the i-th resonant waveband is a waveband with a conventional resonant peak, selecting a plurality of groups of parameters at equal intervals from the optimization floating range through the optimization algorithm based on the initial parameter of the i-th impedance model and the corresponding optimization floating range;
performing optimization fitting on each group of RLC parameters in the plurality of groups of parameters to obtain a fitted curve and a group of RLC parameters with a minimum error with respect to the i-th resonant waveband, wherein the group of RLC parameters with the minimum error is used as an initial parameter for next optimization; and
repeatedly performing execution from the step of selecting a plurality of groups of RLC parameters at equal intervals from the optimization floating range through the optimization algorithm based on a group of RLC parameters obtained by each optimization and having a minimum error, and the corresponding optimization floating range to the step of performing optimization fitting on each group of RLC parameters in the plurality of groups of RLC parameters to obtain a new fitted curve and a group of RLC parameters with a minimum error with respect to the i-th resonant waveband, stopping iteration until the error of the group of RLC parameters with a minimum error is less than the set value, and determining the group of RLC parameters with the minimum error as the model parameter.

6. The method according to claim 5, further comprising: when the i-th resonant waveband is a last waveband with a conventional resonant peak, performing joint optimization on the initial parameters of last two RLC parallel circuits corresponding to the M resonant wavebands and the corresponding optimization floating ranges through the optimization algorithm, and using corresponding RLC parameters that are obtained by optimization and have a minimum error with respect to an actual parameter, with the error being less than a set value, as model parameters of the last two RLC parallel circuits.

7. The method according to claim 1, wherein the performing iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model comprises:

when the i-th resonant waveband is a waveband with a wide resonant peak, selecting a plurality of groups of parameters at equal intervals from the optimization floating range through the preset optimization algorithm based on the initial parameter of each RLC parallel circuit of the i-th impedance model and the corresponding optimization floating range;
performing optimization fitting on each group of RLC parameters in the plurality of groups of parameters to obtain a fitted curve and an RLC parameter, having a minimum error, of each RLC parallel circuit of the i-th resonant waveband, wherein the RLC parameter, having the minimum error, of each RLC parallel circuit is used as an initial parameter for next optimization; and
repeatedly performing execution from the step of selecting a plurality of groups of RLC parameters at equal intervals from the optimization floating range through the preset optimization algorithm based on the RLC parameter, obtained by each optimization and having a minimum error, of each RLC parallel circuit and the corresponding optimization floating range to the step of performing optimization fitting on each group of RLC parameters in the plurality of groups of RLC parameters to obtain a new fitted curve and an RLC parameter, having a minimum error, of each RLC parallel circuit of the i-th resonant waveband, stopping iteration until the error of an RLC parameter, having a minimum error, of each RLC parallel circuit is less than the set value, and determining the RLC parameter, having the minimum error, of each group of RLC parameters as the model parameter.

8. The method according to any one of claims 1 to 7, wherein the passive device comprises at least one of a motor, a resistor, a capacitor, an inductor, and a converter.

9. The method according to any one of claims 1 to 7, wherein the RLC parallel circuit comprises a resistor, a capacitor, and an inductor, and the resistor, the capacitor, and the inductor are connected in parallel.

10. A passive-device impedance fitting apparatus, comprising:

an obtaining unit, configured to obtain an impedance characteristic curve obtained by actually measuring a passive device;
a division unit, configured to divide the impedance characteristic curve into M resonant wavebands arranged in sequence, wherein each of the M resonant wavebands has a conventional resonant peak or a wide resonant peak, and M is an integer greater than or equal to 1;
a determining unit, configured to determine an impedance model corresponding to each of the M resonant wavebands and an initial parameter of the impedance model, wherein an impedance model corresponding to the conventional resonant peak is a resistor-inductor-capacitor (RLC) parallel circuit, and an impedance model corresponding to the wide resonant peak is p RLC parallel circuits that are connected in series, and p is an integer greater than or equal to 2;
an optimization unit, configured to: for an impedance model corresponding to an i-th resonant waveband, perform iterative optimization through a preset optimization algorithm based on the initial parameter of an i-th impedance model and a corresponding optimization floating range, and use a group of parameters that is obtained by optimization and has a minimum error with respect to an actual parameter, with the error being less than a set value as a model parameter of the i-th impedance model, wherein the actual parameter is an RLC parameter of the i-th resonant waveband, and i takes values from 1 to M in sequence; and
a simulation unit, configured to obtain an equivalent impedance model for replacing the passive device based on the model parameters of the impedance models respectively corresponding to the M resonant wavebands.

11. An electronic device, comprising a processor and a memory that are coupled to each other, wherein the memory has a computer program stored therein; and the computer program, when executed by the processor, causes the electronic device to perform the method according to any one of claims 1 to 7.

12. A computer-readable storage medium, having a computer program stored therein, wherein the computer program, when executed on a computer, causes the computer to perform the method according to any one of claims 1 to 7.

$L_1$  $L_2$  $L_n$

$R_1$  $R_2$  $R_n$

$C_1$  $C_2$  $C_n$

... 

Fig. 1

---

Obtain an impedance characteristic curve obtained by actually measuring a passive device ⌐ 110

Divide the impedance characteristic curve into M resonant wavebands arranged in sequence, wherein each of the M resonant wavebands has a conventional resonant peak or a wide resonant peak, and M is an integer greater than or equal to 1 ⌐ 120

Determine an impedance model corresponding to each of the M resonant wavebands and an initial parameter of the impedance model, wherein an impedance model corresponding to the conventional resonant peak is a group of RLC parallel circuit, and an impedance model corresponding to the wide resonant peak is p RLC parallel circuits that are connected in series, and p is an integer greater than or equal to 2 ⌐ 130

For an impedance model corresponding to an i-th resonant waveband, perform iterative optimization through a preset optimization algorithm based on the initial parameter of an i-th impedance model and a corresponding optimization floating range, and using a group of parameters that is obtained by optimization and has a minimum error with respect to an actual parameter, with the error being less than a set value, as a model parameter of the i-th impedance model, wherein the actual parameter is an RLC parameter of the i-th resonant waveband, and i takes values from 1 to M in sequence ⌐ 140

Obtain an equivalent impedance model for replacing the passive device based on the model parameters of the impedance models respectively corresponding to the M resonant wavebands ⌐ 150

Fig. 2

Fig. 3

Fig. 4

Fig. 5

<u>200</u>

Fig. 6

## INTERNATIONAL SEARCH REPORT

International application No.

**PCT/CN2023/119850**

### A. CLASSIFICATION OF SUBJECT MATTER

G06F 30/373(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

DWPI, VEN, CNABS, CNTXT, CNKI, IEEE, ENTXT: 阻抗, 拟合, 曲线, 划分, 谐振峰, 谐振点, 波峰, 串联, 并联, 寻优, 迭代, 参数, impedance, parameter, divide, resonance peak, resonance point, RLC, sequence

### C. DOCUMENTS CONSIDERED TO BE RELEVANT

| Category* | Citation of document, with indication, where appropriate, of the relevant passages | Relevant to claim No. |
|---|---|---|
| PX | CN 115828821 A (CHONGQING CHANG'AN AUTOMOBILE CO., LTD.) 21 March 2023 (2023-03-21)<br>claims 1-12 | 1-12 |
| PX | CN 115828820 A (CHONGQING CHANG'AN NEW ENERGY AUTOMOBILE TECHNOLOGY CO., LTD.) 21 March 2023 (2023-03-21)<br>description, paragraphs 0045-135 | 1-12 |
| Y | 汪泉弟 等(WANG, Quandi et al.). "电机宽频等效电路模型的快速建模方法 (Fast Modeling of the Motor Broadband Equivalent Circuit Model)"<br>重庆大学学报 (Journal of Chongqing University),<br>Vol. 35, No. 12, 15 December 2012 (2012-12-15),<br>pp. 34-39 | 1-4, 8-12 |
| Y | CN 112464602 A (UNIVERSITY OF ELECTRONIC SCIENCE AND TECHNOLOGY OF CHINA) 09 March 2021 (2021-03-09)<br>description, paragraphs 0047-0154 | 1-4, 8-12 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 November 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/119850** |

### C.    DOCUMENTS CONSIDERED TO BE RELEVANT

| Category* | Citation of document, with indication, where appropriate, of the relevant passages | Relevant to claim No. |
| --- | --- | --- |
| Y | CN 112464601 A (UNIVERSITY OF ELECTRONIC SCIENCE AND TECHNOLOGY OF CHINA) 09 March 2021 (2021-03-09)<br>description, paragraphs 0050-0123 | 1-4, 8-12 |
| A | WO 2021253816 A1 (GREE ELECTRIC APPLIANCES, INC. OF ZHUHAI) 23 December 2021 (2021-12-23)<br>entire document | 1-12 |
| A | CN 116681018 A (CHINA SHIP DEVELOPMENT AND DESIGN CENTER) 01 September 2023 (2023-09-01)<br>entire document | 1-12 |

Form PCT/ISA/210 (second sheet) (July 2022)

## INTERNATIONAL SEARCH REPORT
### Information on patent family members

International application No.

**PCT/CN2023/119850**

| Patent document cited in search report | | | Publication date (day/month/year) | Patent family member(s) | | | Publication date (day/month/year) |
|---|---|---|---|---|---|---|---|
| CN | 115828821 | A | 21 March 2023 | None | | | |
| CN | 115828820 | A | 21 March 2023 | None | | | |
| CN | 112464602 | A | 09 March 2021 | None | | | |
| CN | 112464601 | A | 09 March 2021 | None | | | |
| WO | 2021253816 | A1 | 23 December 2021 | CN | 111931329 | A | 13 November 2020 |
| CN | 116681018 | A | 01 September 2023 | None | | | |

Form PCT/ISA/210 (patent family annex) (July 2022)